# FASCICULE DE BREVET EUROPEEN

(11) **EP 4 259 851 B1**
(45) Date de publication et mention de la délivrance du brevet: **18.06.2025**
(21) Numéro de dépôt: 21820287.7
(22) Date de dépôt: 10.12.2021
(51) Int. Cl.: H01M 8/04701, C25B 15/02, C25B 15/021, H01M 8/04223, H01M 8/043, H01M 8/0438, H01M 8/04746, H01M 8/12

(54) **PROCÉDÉ DE FONCTIONNEMENT EN MODE STAND-BY CHAUD D'UNE PILE À COMBUSTIBLE SOFC OU D'UN RÉACTEUR SOEC.**
VERFAHREN ZUM BETREIBEN IM HEISS STANDBY MODUS VON EINER BRENNSTOFFZELLE SOFC ODER EINEM REAKTOR SOEC
METHOD OF OPERATING A FUEL CELL SOFC OR A REACTOR SOEC IN HOT STAND-BY MODUS

(30) Priorité: 11.12.2020 FR 2013059
(43) Date de publication de la demande: 18.10.2023
(73) Titulaire: Commissariat à l'Energie Atomique et aux Energies Alternatives, 75015 Paris (FR)
(72) Inventeur: LACROIX, Vincent, 38054 GRENOBLE Cedex 09 (FR); AICART, Jérôme, 38054 GRENOBLE Cedex 09 (FR)
(74) Mandataire: Cabinet Nony
(86) Numéro de dépôt international: PCT/EP2021/085206
(87) Numéro de publication internationale: WO 2022/123015

(56) Documents cités:
- EP-A1- 2 631 977
- EP-A1- 3 502 317
- WO-A1-2015/014415
- US-A1- 2009 047 555

## Description

### Domaine technique

La présente invention concerne le domaine des piles à combustibles à oxydes solides (SOFC, acronyme anglais pour « *Solid Oxide Fuel Cell* ») et celui de l'électrolyse à haute température de l'eau (EHT, ou EVHT pour électrolyse de la vapeur d'eau à haute température, ou HTE acronyme anglais pour « *High Temperature Electrolysis* », ou encore HTSE acronyme anglais pour « *High Temperature Steam Electrolysis* ») ou du CO₂, ou de la co-électrolyse de la vapeur d'eau et dioxyde de carbone CO₂ également à oxydes solides (SOEC, acronyme anglais pour « *Solid Oxide Electrolysis Cell* »)*.*

L'invention a trait plus particulièrement au fonctionnement des piles à combustibles SOFC ou des réacteurs d'électrolyse ou de co-électrolyse de l'unité, lors d'un arrêt de production, c'est-à-dire avec un courant de sortie ou d'entrée nul, respectivement en cas de coupure de la pile, en cas de faible niveau d'électricité disponible, ou en cas d'accès aux réactifs insuffisant, selon un mode dit de stand-by.

### Technique antérieure

L'électrolyse de l'eau est une réaction électrolytique qui décompose l'eau en dioxygène et dihydrogène gazeux avec l'aide d'un courant électrique selon la réaction:

H₂O→H₂ + 1/2O₂.

Pour réaliser l'électrolyse de l'eau, il est avantageux de la réaliser à haute température typiquement entre 600 et 1000°C, car une partie de l'énergie nécessaire à la réaction peut être apportée par la chaleur qui est moins chère que l'électricité et l'activation de la réaction est plus efficace à haute température et ne nécessite pas de catalyseur noble. Pour mettre en œuvre l'électrolyse à haute température, il est connu d'utiliser un électrolyseur de type SOEC (acronyme anglais de « *Solid Oxyde Electrolyte Cell* »), constitué d'un empilement de motifs élémentaires comportant chacun une cellule d'électrolyse à oxydes solides, constituée au minimum de trois couches anode/électrolyte/cathode superposées l'une sur l'autre, et de plaques d'interconnexion en alliages métalliques aussi appelées plaques bipolaires, ou interconnecteurs. Les interconnecteurs ont pour fonction d'assurer à la fois le passage du courant électrique et la circulation des gaz au voisinage de chaque cellule (vapeur d'eau injectée, hydrogène et oxygène extrait dans un électrolyseur EHT ; air et hydrogène injectés et eau extraite dans une pile SOFC) et de séparer les compartiments anodiques et cathodiques qui sont les compartiments de circulation des gaz du côté respectivement des anodes et des cathodes des cellules. Pour réaliser l'électrolyse de la vapeur d'eau à haute température EHT, on injecte de la vapeur d'eau H₂O dans le compartiment cathodique. Sous l'effet du courant appliqué à la cellule, la dissociation des molécules d'eau sous forme vapeur est réalisée à l'interface entre l'électrode à hydrogène (cathode) et l'électrolyte : cette dissociation produit du gaz dihydrogène H₂ et des ions oxygène. Le dihydrogène est collecté et évacué en sortie de compartiment à hydrogène. Les ions oxygène O²⁻ migrent à travers l'électrolyte et se recombinent en dioxygène à l'interface entre l'électrolyte et l'électrode à oxygène (anode).

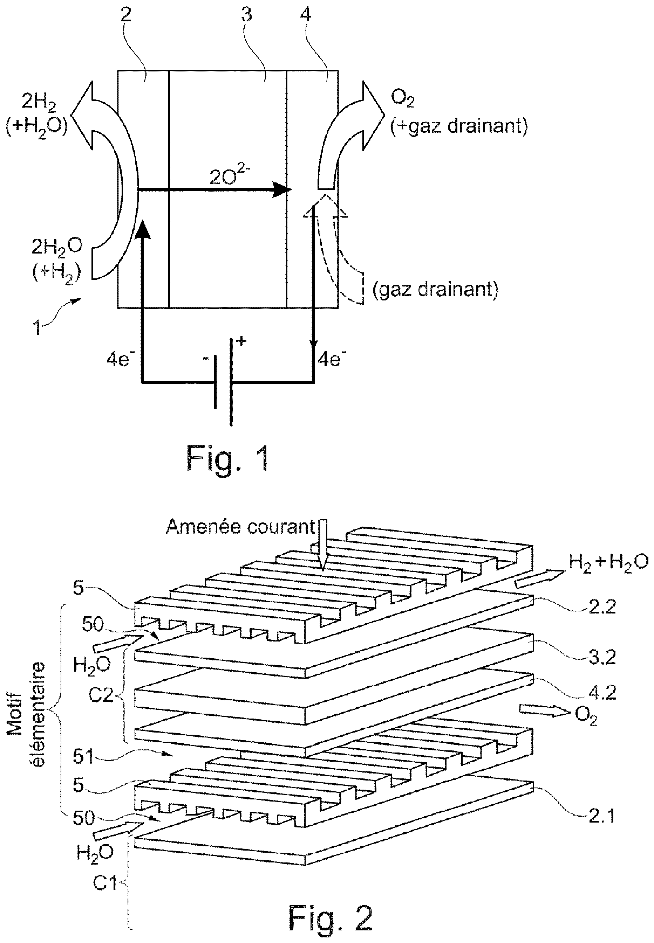

Comme schématisée en figure 1, chaque cellule d'électrolyse élémentaire 1 est formée d'une cathode 2 et d'une anode 4, placées de part et d'autre d'un électrolyte solide 3 généralement sous forme de membrane. Les deux électrodes (cathode et anode) 2,4 sont des conducteurs électroniques, en matériau poreux, et l'électrolyte 3 est étanche au gaz, isolant électronique et conducteur ionique. L'électrolyte peut être en particulier un conducteur anionique, plus précisément un conducteur anionique des ions O²⁻ et l'électrolyseur est alors dénommé électrolyseur anionique.

Les réactions électrochimiques se font à l'interface entre chacun des conducteurs électroniques et le conducteur ionique.

A la cathode 2, la demi-réaction est la suivante :

2 H₂O + 4 e⁻ → 2 H₂ + 2 O²⁻.

A l'anode 4, la demi-réaction est la suivante:

2O²⁻ → O₂+ 4 e⁻.

L'électrolyte 3 intercalé entre les deux électrodes 2, 4 est le lieu de migration des ions O^{2-,} sous l'effet du champ électrique créé par la différence de potentiel imposée entre l'anode 4 et la cathode 2.

L'électrolyse du CO₂ agit sur le même principe que celle de l'eau, à ceci près que la demi réaction à la cathode devient :

2 CO₂ + 4 e⁻ → 2 CO + 2 O²⁻.

En mode pile, les demi-réactions sont inversées, mais on a toujours les ions O²⁻ migrant à travers l'électrolyte.

Comme illustré entre parenthèses en figure 1, la vapeur d'eau en entrée de cathode peut être accompagnée d'hydrogène H₂ et l'hydrogène produit et récupéré en sortie peut être accompagné de vapeur d'eau. De même, comme illustré en pointillés, un gaz drainant, tel que l'air peut en outre être injecté en entrée pour évacuer l'oxygène produit. L'injection d'un gaz drainant a pour fonction supplémentaire de jouer le rôle de régulateur thermique.

Un réacteur d'électrolyse élémentaire est constitué d'une cellule élémentaire telle que décrite ci-dessus, avec une cathode 2, un électrolyte 3, et une anode 4 et de deux connecteurs monopolaires qui assurent les fonctions de distribution électrique, hydraulique et thermique. Pour augmenter les débits d'hydrogène et d'oxygène produits, il est connu d'empiler plusieurs cellules d'électrolyse élémentaires les unes sur les autres en les séparant par des dispositifs d'interconnexion, usuellement appelés interconnecteurs ou plaques d'interconnexion bipolaires. L'ensemble est positionné entre deux plaques d'interconnexion d'extrémité qui supportent les alimentations électriques et des alimentations en gaz de l'électrolyseur (réacteur d'électrolyse).

Un électrolyseur de l'eau à haute température (EHT) comprend ainsi au moins une, généralement une pluralité de cellules d'électrolyse empilées les uns sur les autres, chaque cellule élémentaire étant formée d'un électrolyte, d'une cathode et d'une anode, l'électrolyte étant intercalé entre l'anode et la cathode.

Les dispositifs d'interconnexion fluidique et électrique qui sont en contact électrique avec une ou des électrodes assurent en général les fonctions d'amenée et de collecte de courant électrique et délimitent un ou des chambres/compartiments de circulation des gaz.

Ainsi, une chambre compartiment dit cathodique a pour fonction la distribution du courant électrique et de la vapeur d'eau ainsi que la récupération de l'hydrogène à la cathode en contact.

Une chambre compartiment dit anodique a pour fonction la distribution du courant électrique ainsi que la récupération de l'oxygène produit à l'anode en contact, éventuellement à l'aide d'un gaz drainant.

La figure 2 représente une vue éclatée de motifs élémentaires d'un électrolyseur de vapeur d'eau à haute température selon l'état de l'art. Cet électrolyseur EHT comporte une pluralité de cellules d'électrolyse élémentaires Cl, C2... de type à oxydes solides (SOEC) empilées alternativement avec des interconnecteurs 5. Chaque cellule C1, C2... est constituée d'une cathode 2.1, 2.2,... et d'une anode 4.1, 4.2, entre lesquelles est disposé un électrolyte 3.1, 3.2.... L'ensemble des cellules d'électrolyse est alimenté en série par le courant électrique et en parallèle par les gaz.

L'interconnecteur 5 est un composant en alliage métallique qui assure la séparation entre les compartiments cathodique 50 et anodique 51, définis par les volumes compris entre l'interconnecteur 5 et la cathode adjacente 2.1 et entre l'interconnecteur 5 et l'anode adjacente 4.2 respectivement. Il assure également la distribution des gaz aux cellules. L'injection de vapeur d'eau dans chaque motif élémentaire se fait dans le compartiment cathodique 50. Le collectage de l'hydrogène produit et de la vapeur d'eau résiduelle à la cathode 2.1, 2.2 ... est effectué dans le compartiment cathodique 50 en aval de la cellule C1, C2... après dissociation de la vapeur d'eau par celle-ci. Le collectage de l'oxygène produit à l'anode 4.2 est effectué dans le compartiment anodique 51 en aval de la cellule C1, C2... après dissociation de la vapeur d'eau par celle-ci.

L'interconnecteur 5 assure le passage du courant entre les cellules C1 et C2 par contact, de préférence direct, avec les électrodes adjacentes, c'est-à-dire entre l'anode 4.2 et la cathode 2.1.

Dans une pile à combustible à oxydes solides SOFC, les cellules C1, C2... et interconnecteurs 5 utilisés sont les mêmes composants, mais le fonctionnement est inverse de celui d'un électrolyseur EHT tel qui vient d'être expliqué avec un sens du courant inversé, avec de l'air ou de l'oxygène O₂ qui alimente les compartiments devenus cathodiques et de l'hydrogène et/ou du méthane CH₄ en tant que combustible qui alimente les compartiments devenus anodiques.

En ce qui concerne les matériaux, l'électrolyte solide est un matériau imperméable au gaz, qui doit permettre la diffusion des atomes d'oxygène sous forme d'ions O²⁻ au-delà de 500°C.

Chaque électrode d'une cellule SOEC/SOFC est quant à elle constituée d'un cermet usuellement poreux, composé majoritairement de silice et de nickel du côté hydrogène/H₂O (cathode en (co-)électrolyse, anode en pile SOFC).

Pour fonctionner, un cermet côté hydrogène/H₂O doit avoir le nickel qu'il inclut sous forme réduite : en effet, ce métal réduit a pour rôle de rompre les liaisons H-O. Or, les ions O²⁻ sont capables de migrer depuis le cermet côté air/O₂ vers le cermet côté H₂ à travers l'électrolyte, même en absence de courant.

Et l'absence de courant, peut se produire souvent, une fois que les piles SOFC ou réacteurs d'électrolyse EHT/SOEC ou de co-électrolyse ont été mis en fonctionnement, plus particulièrement pour ces derniers en cas intermittence possible de la production d'électricité.

Il s'avère nécessaire d'assurer le maintien en température des piles à combustible SOFC ou réacteurs d'électrolyse ou de co-électrolyse EHT/SOEC, et ce, de manière d'une part, à éviter un cyclage thermique trop rapide pouvant les endommager et d'autre part, à offrir des possibilités de mise en marche rapide dès la disponibilité à nouveau d'électricité pour les réacteurs EHT/SOEC ou d'exploitation du courant produit pour les piles. Un tel mode de fonctionnement est connu sous l'appellation mode « stand-by » ou « stand-by chaud ». Bien que le flux d'ions O²⁻ évoqué ci-dessus soit faible à courant nul, une cellule maintenue à température de travail, typiquement entre 700 et 800°C, pendant une durée prolongée peut progressivement voir son cermet coté H₂ s'oxyder par ledit flux.

Pour limiter ces risques d'oxydation tout en maintenant un réacteur SOEC ou pile à combustible SOFC en mode stand-by chaud, c'est-à-dire maintenu à une température suffisamment élevée pour démarrer quasi-instantanément, la méthode la plus répandue consiste à réaliser un balayage des chambres côté H₂/H₂O avec un flux continu d'hydrogène, soit pur, soit dilué dans un gaz inerte.

Pour des raisons de sécurité et de coût, des gaz de sûreté à environ 5% d'H₂ dans de l'azote ont tendance à être privilégiés. Le gaz de sécurité peut soit être fourni depuis un conteneur, soit produit sur site à partir d'un réacteur d'électrolyse dédié et/ou une unité de séparation d'air (« Air Separation Unit » d'acronyme anglo-saxon ASU) qui produit notamment de l'oxygène, de l'azote et gaz rares d'une grande pureté.

Cependant, ce balayage continu en gaz de sûreté présente des coûts en termes de:
- matériels mis en oeuvre : un gaz de sûreté peut être recyclé et tourner en boucle, mais il doit être purgé à chaque démarrage sous peine de contaminer l'hydrogène produit ;
- de consommation électrique : le gaz doit être mis en mouvement, notamment au moyen d'un circulateur ;
- de consommation thermique : le gaz de sûreté doit être préchauffer avant d'arriver dans l'enceinte haute température que constitue un réacteur SOEC ou pile à combustible SOFC, afin de ne pas refroidir cette dernière.

D'autres solutions, alternatives au flux de gaz de sûreté sont connues de la littérature.

Par exemple, le brevet US 9,005,827B2 décrit une méthode selon laquelle chaque cellule est maintenue en fonctionnement sous un faible courant appliqué avec une tension de cellule allant de 700 à 1500 mV, afin de prévenir la réoxydation du nickel Ni en NiO.

Le brevet JP2626395B2 propose également d'utiliser une pile SOFC en mode électrolyse de façon périodique, afin de réduire les cermets qui peuvent s'oxyder partiellement lors de son fonctionnement, ce qui allonge la durée de vie de la pile.

A contrario, il est aussi connu d'inverser le fonctionnement d'un réacteur SOEC ou co-électrolyse, c'est-à-dire de les faire fonctionner en pile à combustible SOFC pour produire du courant à partir d'hydrogène H₂, de syngas (mélange d'hydrogène H₂ et de monoxyde de carbone CO), ou de méthane, ce qui permet de maintenir en température le réacteur. Cela présente l'inconvénient majeur de produire du courant électrique non nécessairement valorisable, dès qu'il n'y a plus d'électricité disponible depuis les sources extérieures. En outre, un autre inconvénient majeur est que l'on consomme, c'est-à-dire qu'on brûle, ainsi du combustible, i.e. H₂, syngas ou méthane, uniquement à des fins de maintien en température du réacteur et sans obtention d'autre produit combustible mais uniquement d'électricité qui n'est pas nécessairement valorisable à ce moment précis.

La demande de brevet US2003/0235752 propose l'agencement de matériaux de captage, tels que nickel, capables de réagir avec les traces d'oxygène dans le flux entrant dans le compartiment hydrogène, de sorte que ces matériaux sont oxydés plutôt que les cermets. Cette solution peut permettre de réaliser un balayage avec un azote quasi pur (sans H₂), les traces d'oxygène encore présentes étant capté par le(s) matériau(x) ajouté(s). Un tel gaz de balayage (azote pur) a pour avantage d'être moins cher, mais sa mise en oeuvre ne règlerait pas la problématique de migration des ions O²⁻ dans l'électrolyte, ni la consommation énergétique du gaz de balayage due à l'utilisation d'un compresseur et de la nécessité d'une préchauffe.

Il existe ainsi un besoin d'améliorer les solutions existantes de maintien en mode stand-by chaud tout en limitant les risques d'oxydation d'un réacteur SOEC ou d'une pile à combustible SOFC, notamment afin de pallier les inconvénients précités.

Le but de l'invention est de répondre au moins en partie à ce besoin.

### Exposé de l'invention

Pour ce faire, l'invention concerne, un procédé de fonctionnement en mode stand-by chaud d'une pile à combustible (SOFC) ou d'un réacteur d'électrolyse ou de co-électrolyse haute température, à empilement de cellules électrochimiques élémentaires de type à oxydes solides (SOEC), le procédé comprenant, pendant une période donnée d'absence d'un courant électrique respectivement sortant ou appliqué à l'empilement ou lorsque l'on souhaite réaliser une montée ou une descente en température de la pile ou du réacteur, une étape d'alimentation des compartiments du côté des électrodes à hydrogène/eau (H₂/H₂O), par des impulsions d'un gaz de sûreté à intervalle de temps régulier pendant la période donnée ou lorsque la tension de cellule devient inférieure à une valeur seuil, de sorte à renouveler le(s) gaz présent(s) dans lesdits compartiments.

Par « mode stand-by chaud », on entend ici et dans le cadre de l'invention, le maintien d'une pile à combustible SOFC ou d'un réacteur d'électrolyse SOEC à une température de fonctionnement normal, typiquement de 700 à 800°C, lors de l'arrêt du fonctionnement par l'absence de courant en sortie (pile) ou en entrée (réacteur SOEC).

Le gaz de sûreté est avantageusement choisi parmi l'hydrogène (H₂) pur, l'hydrogène (H₂) dilué dans de l'azote, de préférence dilué de 1 à 5 vol% dans de l'azote. Un optimal est de l'hydrogène (H₂) dilué à environ 3 vol% dans de l'azote.

Avantageusement, la tension du (des) empilement(s) est surveillée. Si la tension de cellule passe en-dessous de 0,8V ou d'une valeur inférieure, une impulsion de gaz sera délivrée. Autrement dit, l'étape d'alimentation par les impulsions de gaz de sûreté est réalisée avantageusement pour une valeur seuil de tension de cellule inférieure ou égale à 0,8V. Avantageusement encore, le débit de gaz de sûreté par impulsion est inférieur ou égal à inférieur à 10 NmL/min/cm², de préférence inférieur à 5 NmL/min/cm². Typiquement, il est de l'ordre de 6 NmL/min/cm².

Le débit, l'intervalle et la durée des impulsions dépendra de la configuration de l'installation, et le ratio volume/distance entre les empilements de cellule et les appareils de mesures et de contrôle. Le profil des impulsions (rampes entre débit nul et débit maximal) peut avantageusement varier également selon le modèle des empilements, et la configuration des lignes d'alimentation, cela afin de limiter les effets de « coups de bélier » pouvant être néfastes au système électrochimique.

Selon une variante avantageuse, lorsqu'aucune impulsion de gaz de sûreté n'alimente les compartiments du côté des électrodes à hydrogène/eau (H₂/H₂O), on ferme toutes les lignes d'alimentation en gaz du réacteur ou la pile à combustible, de sorte à limiter le refroidissement de celui(celle)-ci par déplacement de gaz.

Selon un mode de réalisation avantageux, on réalise simultanément ou en décalage temporel des impulsions de gaz de sûreté une purge des compartiments du côté des électrodes à oxygène (O₂), au moyen d'un gaz neutre ou fortement appauvri en oxygène. On réduit voire on supprime ainsi le flux d'ions O²⁻ envoyés vers l'électrolyte par réduction de la pression partielle d'oxygène.

Selon une variante avantageuse, pour compenser les pertes thermiques par convection à travers l'enceinte qui loge le réacteur SOEC ou la pile à combustible SOFC, on réalise simultanément aux impulsions de gaz de sûreté un chauffage de l'empilement pour le maintenir en température.

Selon cette variante, de préférence, on réalise le chauffage de l'empilement au moyen d'une semelle chauffante en contact avec l'empilement.

Le procédé selon l'invention peut être avantageusement mis en œuvre dans une unité, dite power-to-gas, comprenant une pluralité de réacteurs (SOEC).

Ainsi, l'invention consiste essentiellement à envoyer dans un système à cellules électrochimiques à oxydes solides (réacteur SOEC ou pile à combustible SOFC), qui est en mode de stand-by chaud, un gaz de sûreté dans les compartiments/chambres H₂/H₂O, de manière intermittente à intervalle de temps régulier.

En renouvelant ainsi régulièrement le gaz présent avec un gaz de sûreté approprié, on supprime le risque d'oxydation des cermet d'électrodes à hydrogène.

Le fait d'utiliser un flux intermittent de gaz de sûreté a en outre pour effet de supprimer le refroidissement par convection du gaz dans l'enceinte dans laquelle est placé(e) le réacteur/la pile à combustible SOFC.

Les pertes thermiques par l'enceinte chaude peuvent être compensées par la chauffe de l'enceinte elle-même ou directement par celle de l'empilement de cellules, notamment au moyen d'une semelle chauffante en contact avec l'empilement.

La fréquence du balayage de gaz de sûreté, et sa quantité (débit, durée) sont à ajuster en fonction du système électrochimique qui est mis en œuvre. Plus particulièrement, leur ajustement peut être fait :
- selon le type et fabricant des cellules qui impacte directement le flux d'ions O²⁻ susceptibles de migrer : celui-ci peut être variable, car dépendant des différentes épaisseurs des couches constitutives d'une cellule (cermets coté H₂ et O₂, électrolyte) ;
- selon la pression partielle d'O₂ du côté des compartiments de circulation d'O₂ : plus la pression partielle du compartiment est élevée, et plus le cermet coté O₂ est facilement oxydé, ce qui augmente la force motrice de création d'ions O²⁻ à l'interface cermet O₂/électrolyte ;
- du volume de tuyauterie depuis le réservoir/circulateur de gaz de sûreté : plus la distance à parcourir et le volume que cela représente sont importants, et plus il est nécessaire d'injecter du gaz pour renouveler l'atmosphère d'un empilement de cellules électrochimiques ;
- de la concentration en agent réducteur, notamment d'hydrogène dans le gaz de sûreté : plus ce gaz est réducteur, plus le volume requis pour renouveler l'atmosphère réductrice d'un empilement peut être faible.

Au final, l'invention apporte de nombreux avantages parmi lesquels on peut citer:
- réduction du coût énergétique par la consommation au juste nécessaire d'un gaz de sûreté pour éviter toute oxydation des cermets d'une pile à combustible SOFC ou d'un réacteur SOEC ;
- moindre sollicitation du matériel nécessaire à l'alimentation en gaz de sûreté et donc plus grande durée de vie à moindre coût d'investissement.

D'autres avantages et caractéristiques de l'invention ressortiront mieux à la lecture de la description détaillée d'exemples de mise en œuvre de l'invention faite à titre illustratif et non limitatif en référence aux figures suivantes.

### Brève description des dessins

[Fig 1] la figure 1 est une vue schématique montrant le principe de fonctionnement d'un électrolyseur d'eau à haute température.
[Fig 2] la figure 2 est une vue schématique en éclaté d'une partie d'un électrolyseur de vapeur d'eau à haute température comprenant des interconnecteurs.

### Description détaillée

Les figures 1 et 2 ont déjà été commentées en préambule. Elles ne seront donc pas détaillées ci-après.

On précise également que les électrolyseurs ou piles à combustible décrits sont de type à oxydes solides (SOEC, acronyme anglais de « *Solid Oxyde Electrolyte Cell* »ou SOFC, acronyme anglais de « *Solid Oxide Fuel Cell* ») fonctionnant à haute température. Ainsi, tous les constituants (anode/électrolyte/cathode) d'une cellule d'électrolyse ou de pile sont des céramiques. La haute température de fonctionnement d'un électrolyseur (réacteur d'électrolyse) ou d'une pile est typiquement comprise entre 600°C et 1000°C. Typiquement, les caractéristiques d'une cellule d'électrolyse SOEC convenant à l'invention, du type cathode support (CSC), peuvent être celles indiquées comme suit dans le tableau 1 ci-dessous.

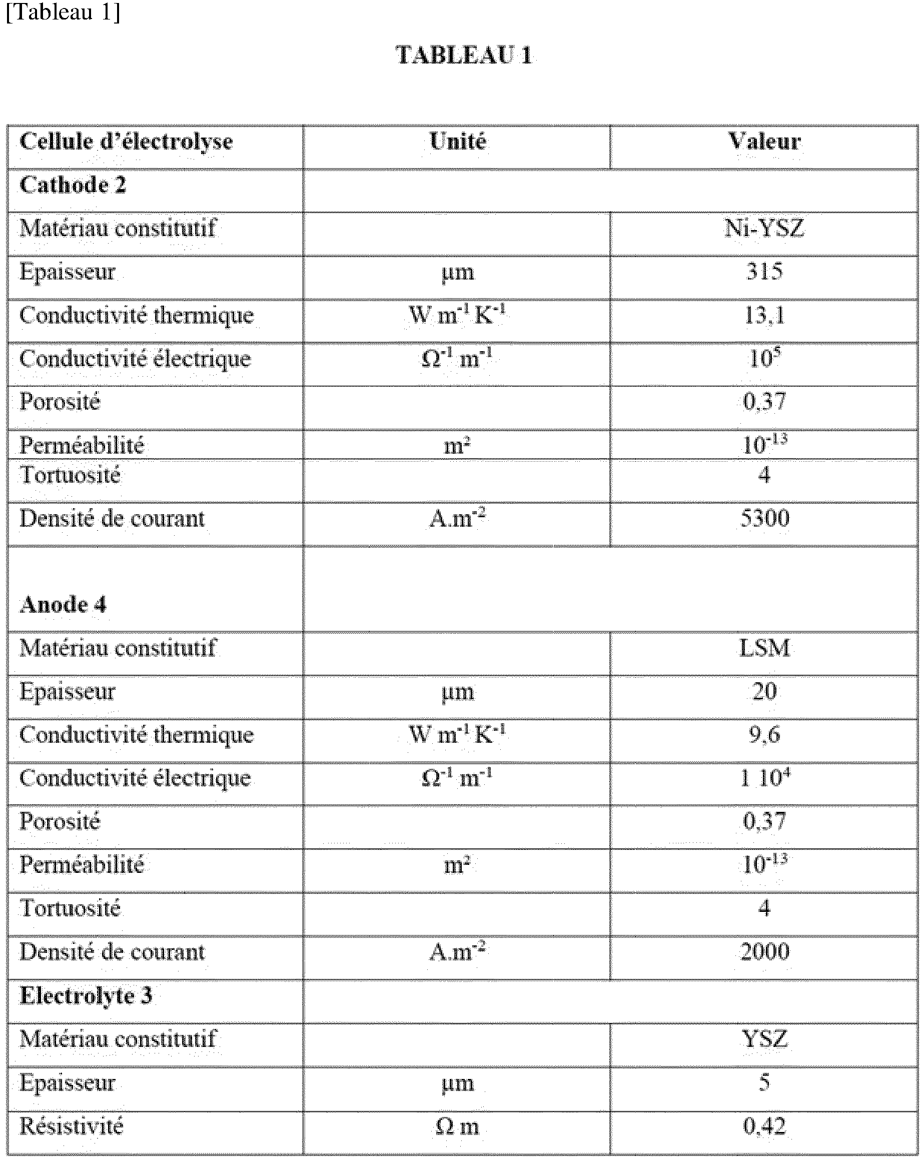

Selon l'invention, lorsqu'un réacteur SOEC ou une pile à combustible SOFC, est en mode de stand-by chaud, un gaz de sûreté dans les compartiments/chambres H₂/H₂O, de manière intermittente à intervalle de temps régulier.

Le gaz de sûreté est avantageusement de l'hydrogène (H₂) dilué à environ 3 vol% dans de l'azote.

Avantageusement, la tension du (des) empilement(s) est surveillée. Si la tension de cellule passe en-dessous de 0,8V ou d'une valeur inférieure, une impulsion de gaz de sûreté est délivrée.

Typiquement, le débit de gaz de sûreté par impulsion est de l'ordre de 6 NmL/min/cm².

L'invention n'est pas limitée aux exemples qui viennent d'être décrits ; on peut notamment combiner entre elles des caractéristiques des exemples illustrés au sein de variantes non illustrées.

## Revendications

1. Procédé de fonctionnement en mode stand-by chaud d'une pile à combustible (SOFC) ou d'un réacteur (1) d'électrolyse ou de co-électrolyse haute température, à empilement de cellules électrochimiques élémentaires de type à oxydes solides (SOEC), le procédé comprenant, pendant une période donnée d'absence d'un courant électrique respectivement sortant ou appliqué à l'empilement ou lorsque l'on souhaite réaliser une montée ou une descente en température de la pile ou du réacteur, une étape d'alimentation des compartiments du côté des électrodes à hydrogène/eau (H₂/H₂O), par des impulsions d'un gaz de sûreté à intervalle de temps régulier pendant la période donnée, ou lorsque la tension de cellule devient inférieure à une valeur seuil, de sorte à renouveler le(s) gaz présent(s) dans lesdits compartiments.

2. Procédé selon la revendication 1, le gaz de sûreté étant choisi parmi l'hydrogène (H₂) pur, l'hydrogène (H₂) dilué dans de l'azote, de préférence dilué de 1 à 5%vol dans de l'azote.

3. Procédé selon la revendication 1 ou 2, l'étape d'alimentation par les impulsions de gaz de sûreté étant réalisée pour une valeur seuil de tension de cellule inférieure ou égale à 0,8V.

4. Procédé selon l'une des revendications précédentes, le débit de gaz de sûreté par impulsion étant inférieur à 10 NmL/min/cm², de préférence inférieur à 5 NmL/min/cm².

5. Procédé selon l'une des revendications précédentes, selon lequel lorsqu'aucune impulsion de gaz de sûreté n'alimente les compartiments du côté des électrodes à hydrogène/eau (H₂/H₂O), on ferme toutes les lignes d'alimentation en gaz du réacteur ou la pile à combustible de sorte à limiter le refroidissement de celui(celle)-ci par déplacement de gaz.

6. Procédé selon l'une des revendications précédentes, selon lequel on réalise simultanément ou en décalage temporel des impulsions de gaz de sûreté, une purge des compartiments du côté des électrodes à oxygène (O₂), au moyen d'un gaz neutre ou fortement appauvri en oxygène.

7. Procédé selon l'une des revendications précédentes, selon lequel on réalise simultanément aux impulsions de gaz de sûreté, un chauffage de l'empilement pour le maintenir en température.

8. Procédé selon la revendication 7, selon lequel on réalise le chauffage de l'empilement au moyen d'une semelle chauffante en contact avec l'empilement.

9. Procédé selon l'une des revendications précédentes mis en œuvre dans une unité, dite power-to-gas, comprenant une pluralité de réacteurs (SOEC).

## Patentansprüche

1. Verfahren zum Betreiben einer Brennstoffzelle (SOFC) oder eines Reaktors (1) für die Hochtemperatur-Elektrolyse oder Hochtemperatur-Co-Elektrolyse im Hot-Standby-Modus, mit einem Stapel aus elektrochemischen Festoxid-Elektrolyseurzellen (SOEC), wobei das Verfahren über einen bestimmten Zeitraum, in dem kein elektrischer Strom den Stapel verlässt beziehungsweise kein Strom daran angelegt wird, oder wenn eine Temperaturerhöhung oder -absenkung der Brennstoffzelle oder des Reaktors erreicht werden soll, einen Schritt zum Zuführen von Stößen eines Sicherheitsgases zu Bereichen bei den Wasserstoff-/Wasser-Elektroden (H₂/H₂O) in regelmäßigen Abständen während des bestimmten Zeitraums umfasst oder wenn die Zellenspannung unter einen Schwellenwert sinkt, damit das in den Bereichen vorhandene Gas bzw. die dort vorhandenen Gase verdrängt wird bzw. werden.

2. Verfahren nach Anspruch 1, wobei das Sicherheitsgas aus reinem Wasserstoff (H₂), in Stickstoff, vorzugsweise in 1 bis 5 Vol.-% Stickstoff, verdünntem Wasserstoff (H₂) ausgewählt wird.

3. Verfahren nach Anspruch 1 oder 2, wobei der Schritt zum Zuführen von Sicherheitsgasstößen bei einem Schwellenwert der Zellenspannung von kleiner gleich 0,8 V durchgeführt wird.

4. Verfahren nach einem der vorhergehenden Ansprüche, wobei der Volumenstrom des Sicherheitsgases pro Stoß unter 10 Nml/min/cm², vorzugsweise unter 5 Nml/min/cm² liegt.

5. Verfahren nach einem der vorhergehenden Ansprüche, wobei, wenn den Bereichen bei den Wasserstoff-/Wasser-Elektroden (H₂/H₂O) keine Sicherheitsgasstöße zugeführt werden, sämtliche Gaszufuhrleitungen des Reaktors oder der Brennstoffzelle geschlossen werden, damit die Abkühlung desselben/derselben durch Gasverdrängung begrenzt wird.

6. Verfahren nach einem der vorhergehenden Ansprüche, wobei gleichzeitig mit den Sicherheitsgasstößen oder zeitlich versetzt dazu die Bereiche bei den Sauerstoffelektroden (O₂) mit einem neutralen Gas oder einem stark sauerstoffabgereicherten Gas gespült werden.

7. Verfahren nach einem der vorhergehenden Ansprüche, wobei gleichzeitig mit den Sicherheitsgasstößen eine Erwärmung des Stapels vorgenommen wird, damit er auf Temperatur bleibt.

8. Verfahren nach Anspruch 7, wobei die Erwärmung des Stapels mit einer Heizplatte im Kontakt mit dem Stapel vorgenommen wird.

9. Verfahren nach einem der vorhergehenden Ansprüche, das in einer als Power-to-Gas-Einheit bezeichneten Einheit durchgeführt wird, die eine Vielzahl von Reaktoren (SOEC) umfasst.

## Claims

1. Method for operating, in hot stand-by mode, a fuel cell (SOFC) or a high temperature co-electrolysis or electrolysis reactor (1) having a stack of elementary electrochemical cells of the solid oxide type (SOEC), the method comprising, for a given period of time in which there is no electrical current exiting and/or applied to the stack, or when the temperature of the cell or the reactor is to be raised or lowered, a step of supplying pulses of a safety gas to the compartments on the side of the hydrogen/water (H₂/H₂O) electrodes, at regular intervals for the given period of time, or when the cell voltage drops below a threshold value, so as to renew the gas(es) present in said compartments.

2. Method according to Claim 1, wherein the safety gas is selected from among pure hydrogen (H₂), and hydrogen (H₂) diluted in nitrogen, preferably diluted from 1% to 5% by volume in nitrogen.

3. Method according to Claim 1 or 2, wherein the step of supplying pulses of safety gas is performed for a cell voltage threshold value less than or equal to 0.8 V.

4. Method according to one of the preceding claims, wherein the flow rate of pulses of safety gas is less than 10 NmL/min/cm², preferably less than 5 NmL/min/cm².

5. Method according to one of the preceding claims, in which, when no pulses of safety gas are supplied to the compartments on the side of the hydrogen/water (H₂/H₂O) electrodes, all the gas supply lines of the reactor or the fuel cell are closed so as to limit the cooling of the reactor or fuel cell via the movement of gas.

6. Method according to one of the preceding claims, in which, at the same time as or with a temporal shift from the pulsing of safety gas, the compartments on the side of the oxygen (O₂) electrodes are purged using a neutral gas or a greatly oxygen-depleted gas.

7. Method according to one of the preceding claims, in which, at the same time as the pulsing of safety gas, the stack is heated to maintain its temperature.

8. Method according to Claim 7, in which the stack is heated using a heating baseplate in contact with the stack.

9. Method according to one of the preceding claims implemented in a unit, referred to as power-to-gas unit, comprising a plurality of reactors (SOEC).
